# EUROPEAN PATENT APPLICATION

(11) **EP 2 924 338 A1**
(43) Date of publication of application: **30.09.2015**
(21) Application number: 15161416.1
(22) Date of filing: 27.03.2015
(51) Int. Cl.: F21S 8/04, F21V 21/04, H02G 3/20

(54) **APPARATUS SECURING DEVICE**

(30) Priority: 28.03.2014 IN DE08932014
(71) Applicant: Flowil International Lighting (HOLDING) B.V., 1097 JB Amsterdam (NL)
(72) Inventor: Taylor, Paul, London, EC1Y 4TW (GB); Muir, Philip, London, EC1Y 4TW (GB); Ives, Andrew, London, EC1Y 4TW (GB)
(74) Representative: Pons Ariño, Angel

(57) **Abstract**

The invention provides a device that when secured to an apparatus allows the apparatus to be inserted and secured into an aperture in a substrate of varying material and thickness in a single movement/motion/operation. The invention comprises single structure made from a single material that includes a number of features that automatically adjust and secure to the substrate regardless of its construction with sufficient force as to hold the apparatus securely in the substrate indefinitely.

The device of invention can be made from multiple components each of a different material.

## Description

### FIELD OF INVENTION

The present invention relates to an apparatus securing device. Particularly, present invention relates to an apparatus securing device that securely holds an apparatus into an aperture in a substrate of varying material and thickness in a single movement/motion/operation by the user undertaking the task.

### BACKGROUND/PRIOR ART OF INVENTION

Many types of apparatus used in the lighting industry (and many outside the lighting industry) require installation into substrates such as ceilings, walls, floors or tiles, where cutting an aperture in these substrates is possible. It's often desirable to place or recess the apparatus (such as a light fitting) positioned in the void behind the substrate through an aperture. This leaves the visible side of the substrate as uninterrupted as possible by hiding the major part of the apparatus and other workings behind the substrate.

These substrates are often of different thicknesses and material types and the apparatus being installed often requires the means of catering to these different materials and thicknesses.

Existing mechanisms or devices made up of multiple components that have features that require multiple operations in that they must be adjusted or held in a certain position before the process of inserting the apparatus into the aperture of the substrate. These are then released or activated by a separate operation to secure the apparatus into the aperture.

These operations are done by the user which takes extra time or effort for the user. Another drawback is that loose components can be dropped by the user. Further, instructions are sometimes required to understand more complex procedures which take extra time and are not intuitive.

Some prior arts require tools to subsequently fix the device and apparatus into position. Other prior arts require additional components that protect the substrate from the thrust that the mechanisms apply.

Now, reference may be made to the following patents:-

Publication No WO2012055368 relates to a dismountable installation structure of a lamp comprising a claw component and a grip hook. The claw component comprises a shell and a pincer body disposed inside the shell. At one end of the pincer body is disposed a pair of pincers complementary to the grip hook.

Publication No US2011256749 relates to a press-fit connecting element for being pressed into a first contact opening in a first connection element and into a second contact opening in a second connection element.

Publication No DE10055060 relates to a two-part fixture that secures a transponder to an adjacent sheet metal panel. The fixture consists of a conical base and crown with detents for a matching snap-fit clip. The base widens the clip claws as these are pushed home.

US Patent No 5,941,625 relates to recessed ceiling lighting fixtures and, more particularly, it relates to an improved spring clip for holding a light fitting into a light fixture and for securing the light fixture to a ceiling structure. The spring clip extends through a slot in the light fixture housing extending outside thereof to engage the ceiling structure.

Publication No CN2599385 relates to the utility model providing a cylinder lamp in which the lamp cap is spring clamped in the lamp holder, and adopts a dipper shaped reflector.

Publication No CN101629706 relates to an automatic installation mechanism of an embedded type lamp, comprising an elastic mechanism used for fixing the lamp, wherein one end of the elastic mechanism is connected with the lamp, and the elastic mechanism comprises an elastic end and an installation arm capable of swinging.

JP2001167626 relates to an operating piece that is structured such that it can be applied with an operating force at a point inward from points of inner and outer spring portions contacted to a body sidewall. An attaching member as a whole is descended and is pushed out by itself. In this state, a ceiling engaging portion is support-engaged with a ceiling material and then fixed thereto.

Publication No. WO2005022033 (A1) relates to a recessable luminaire. The luminaire comprises a fixing support and a slot. It is characterized in that it comprises at least one tongue able to be inserted in the slot and one clip for retaining the tongue, said tongue being able to pivot on a shaft. Tthe retaining clip being intended to exert a pressure on said support in such a way that said tongue is able to exert a pressure on a false ceiling after having pivoted on said shaft.

Publication No. WO2010100138 (A1) relates to a mounting device a recessed ceiling light, comprising an installation frame that is intended for insertion into the opening of a ceiling and means for holding the light, and at least one locking element for fixing the installation frame in the ceiling. The locking element is bistable and can be transferred from a first stable state, in which the insertion of the installation frame into the ceiling opening or the removal of the installation frame from the ceiling opening is enabled, to a second stable state, in which the installation frame is fixed in the ceiling.

Publication No 6,554,458 relates to a recessed light fixture for mounting into an opening made in a ceiling, wall or the like comprises a pot having a peripheral edge abutting the area adjacent a hole made in the ceiling or wall and one or more retaining clips for securing the fixture to the ceiling, wall or the like. Each retaining clip comprises an upper connecting portion with a threaded hole extending therethrough and a lower spring action adapted to contact the rear wall surface of the ceiling, wall or the like. A bolt extends through the threaded hole of the upper connecting portion and its actuation causes the clip to move in and out of a securing contact with the ceiling, wall or the like

Publication No. AU2013100156 relates to non-metallic light fitting manufactured from silicone rubber or similar flexible material capable of withstanding highly corrosive operational environments. The preferred embodiment is an annular grommet moulded from a single homogenous piece of flexible, advanced material, capable of withstanding high operating temperatures. Fitting may be deformed by hand for the purpose of installation into the cut-out void of a ceiling or bulkhead panel and will immediately reinstate to the original moulded shape thereby securing it to the mounting substrate.

However, strong metal spring clips can cause injury to user when released.

Additionally, during removal of the apparatus from the substrate the force required to overcome some mechanisms can cause them to burst through common substrate types such as plaster or fibre board.

Thus there is a need to develop a device that automatically adjusts to any type of substrate it engages with.

The invention securely holds an apparatus into an aperture in a substrate of varying material and thickness in a single movement/motion/operation by the user undertaking the task.

### OBJECTS OF THE INVENTION

Primary object of the present invention is to provide a securing device to install the apparatus securely in a single operation making it as quick as possible. Another object of the present invention is to provide a securing device that adapts automatically to different substrate materials and thicknesses.

Yet another object of the present invention is to provide a securing device which does not require prior adjustment, tools or subsequent fixing operations.

Still another object of the present invention is to provide a securing device to secure the apparatus without the need for secondary fixing such as screws.

Another object of the present invention is to provide a securing device having a single component with no individual moving parts or assembly and can be manufactured from a single material.

### STATEMENT OF THE INVENTION

According to this invention, there is provided an apparatus securing device comprising a curved member connected to a plurality of longitudinal members on one side together with a location means on other side for securing the device to the apparatus.

### SUMMARY OF THE INVENTION

Accordingly the present invention provides an apparatus securing device to secure an apparatus into an aperture in a substrate in a single movement/ motion/ operation.

The device comprises a single structure made from a single material that includes a number of components which automatically adjust and secure to the substrate regardless of its construction with sufficient force to hold the apparatus securely in the substrate indefinitely. The device of invention can be made from multiple components each of a different material.

The invention automatically adjusts during the single inserting movement/ motion/ operation to different substrate types and thicknesses without the requirement of any kind of prior adjustment or secondary fixing operations.

### BRIEF DESCRIPTION OF THE ACCOMPANYING DRAWINGS

Further objects and advantages of this invention will be more apparent from the ensuing description when read in conjunction with the accompanying drawings and wherein:
Fig. 1 shows the securing device as a single component made from a single material according to a preferred embodiment;
Fig. 2 shows gripping means at one end;
Fig. 3 shows removal means near to the gripping means to remove the apparatus;
Fig. 4 shows securing the device to the apparatus by a number of location details;
Fig. 5 shows the elongated features having freedom to move when a force is applied in the intended area and direction;
Fig. 6a and 6b show freedom to move when a force is applied in the intended area and direction;
Fig. 7 shows the single movement/ motion/ operation of inserting the apparatus from the start position into the aperture;
Fig. 8 shows the elongated features coming into contact with the juncture (or edge) of the first face of the substrate and the inside face of the aperture;
Fig. 9 shows deflection of the elongated features inside of the aperture as the apparatus is inserted;
Fig. 10 and 11 show gripping means deflected and eventually emerged from the aperture;
Fig. 12 shows total height of the gripping means to insert the apparatus;
Fig. 13 shows the apparatus featuring a stop means;
Figure 14 shows the thinnest substrate according to a preferred embodiment; and
Figure 15 shows the thickest substrate according to another preferred embodiment.

### DETAIL DESCRIPTION OF THE INVENTION (PREFERRED EMBODIMENTS) WITH REFERENCE TO THE ACCOMPANYING DRAWINGS:-

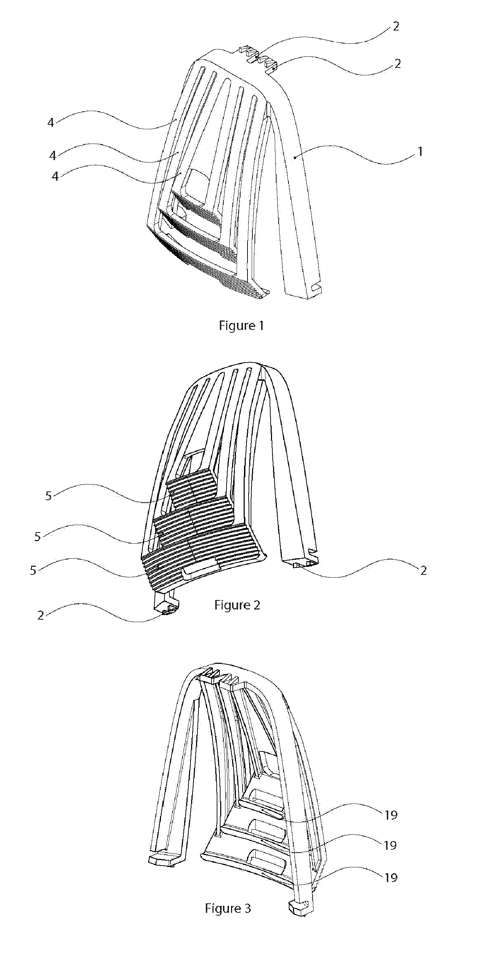

The present invention discloses an apparatus securing device. Referring to fig. 1, the invention in its preferred embodiment comprising a single structure made from a single material. The device of invention could be made from multiple components each of a different material. As shown in fig. 1, the invention comprises of a number of location means 2 and a number of longitudinal members 4, each of which is having gripping means (or profile) 5 at one end (shown in Fig. 2) to secure the device to the apparatus. The longitudinal member (elongated member) comprises spring or flexing arm. Once secured to the apparatus the longitudinal members have freedom to move when a force is applied in the intended area and direction.
Now, reference may be made to fig. 3 showing removal means 19 in proximity to the gripping means to remove the apparatus from the aperture that makes it possible to pull the gripping means inward of the aperture thus allowing the removal of the apparatus from the substrate. This requires the apparatus to allow access to these details (means) by means of a clear space/channel or the apparatus features a removable part allowing access to the removal means.

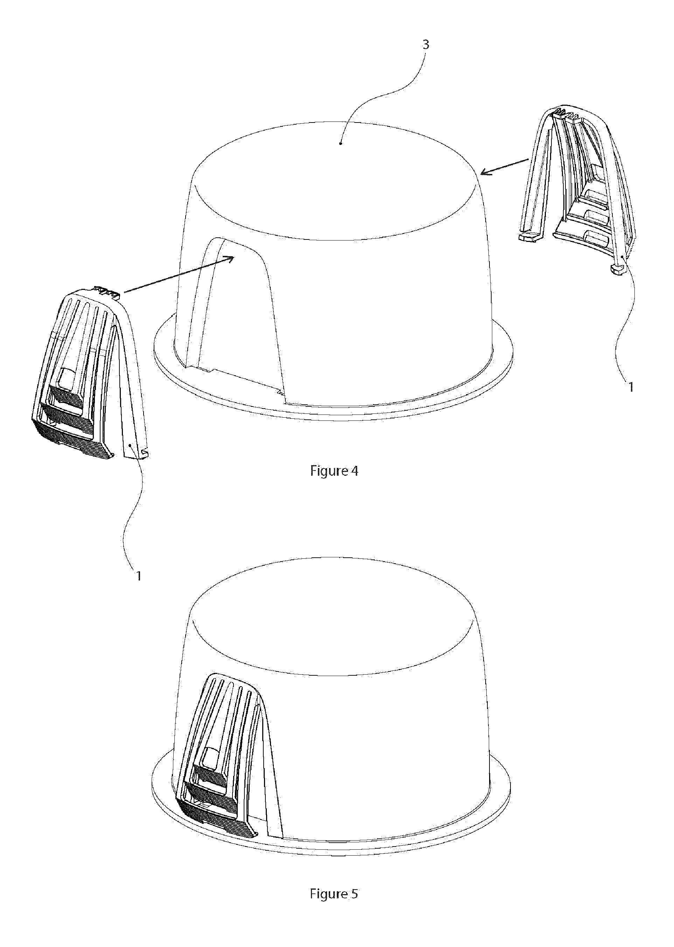

Fig. 4 shows securing the device to the apparatus 3 by a number of location means 2 shown in Fig. 1 and 2.

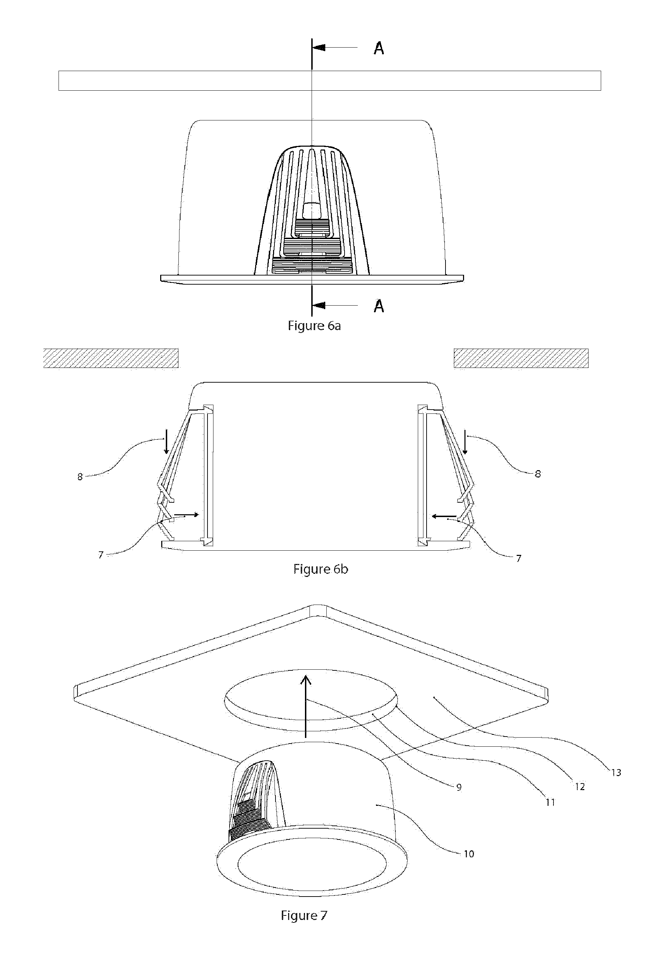

Once secured to the apparatus as shown in Fig. 5, the longitudinal members have freedom to move when a force is applied in the intended area and direction (7, 8) (shown in Fig 6b).

The longitudinal member in conjunction with gripping means and removal means constituting an elongated structure provided in a number.

The elongated structures are mounted on the curved member maintaining a gap therebetween i.e. between the elongated structures from bottom and both sides in which each of the elongated structure is positioned at varying distance from the curved member.

The locating means is mounted on top of the member directing towards the apparatus secured therewith.

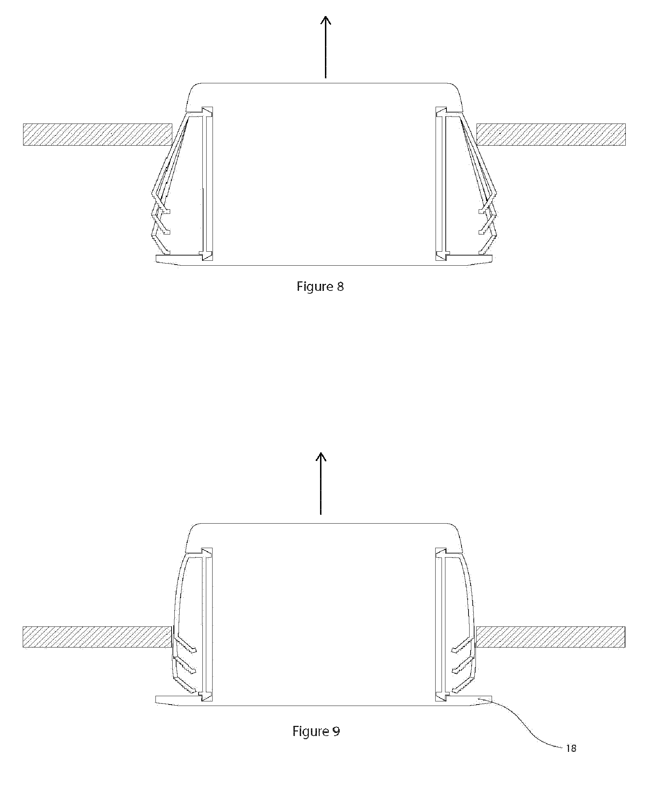

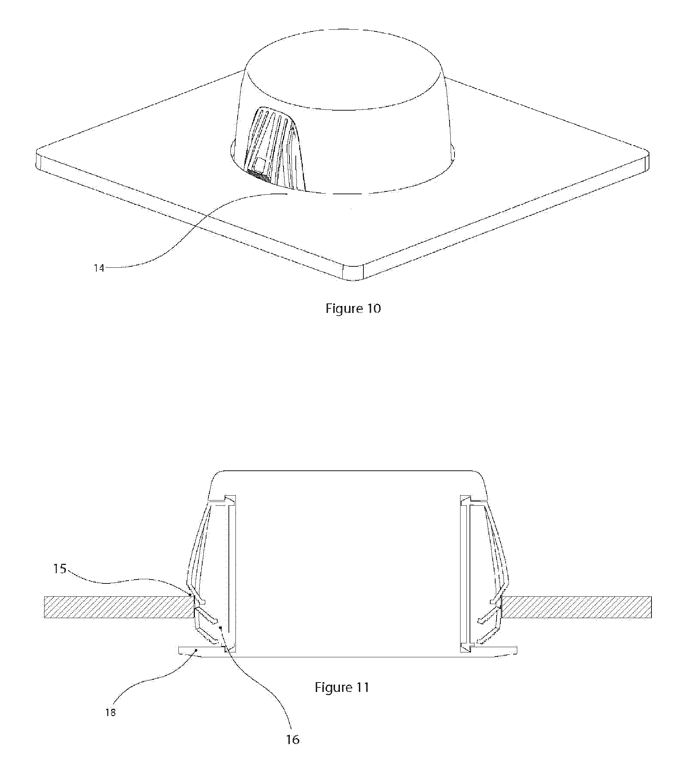

Fig. 7 shows the single movement/ motion/ operation of inserting the apparatus 10 from the position 9 into the aperture 11 in the indicated direction 9 causing the longitudinal members to come into contact with the juncture 12 (or edge) of the first face of the substrate 13 and the inside face of the aperture which is shown in Fig. 8. This applies the necessary force to deflect the elongated members inside of the aperture as the apparatus is inserted (as shown in Fig. 9). The longitudinal members are shaped in such a way to allow this required deflection. As the operation of inserting the apparatus continues the gripping means are deflected and eventually emerge from the aperture and become exposed to the second surface 14 of the substrate (as shown in Figure 10).

At this point the longitudinal members attempt to return to their original position due to the sufficient elastic memory of the material. Referring to fig. 11, wherein this return force causes the relevant gripping means to locate against the juncture of the second face of the substrate and the inside face of the aperture 15. The gripping means in its preferred embodiment comprising a plurality of stepped profiles that cater to as many different substrate thicknesses as possible whilst still maintaining a sufficient surface area to hold onto the aperture/substrate juncture/edge. These gripping means could be shaped in the form such as mounds, grooves or other shapes at the desired intervals that secure the device to the aperture/substrate edge. The gripping means form a stepped (or other) profile that is divided up across the tips of the longitudinal member to provide the means by which the gripping means can form a grip up against apertures of varying thickness. In the preferred embodiment the longitudinal members are arranged such that when they flex they do not collide with each other assuring that each gripping means can act independently of the others. The longitudinal member and gripping means when flex inwards of the start position are always be able to fit in the space left void between the aperture of the substrate and the apparatus itself 16.

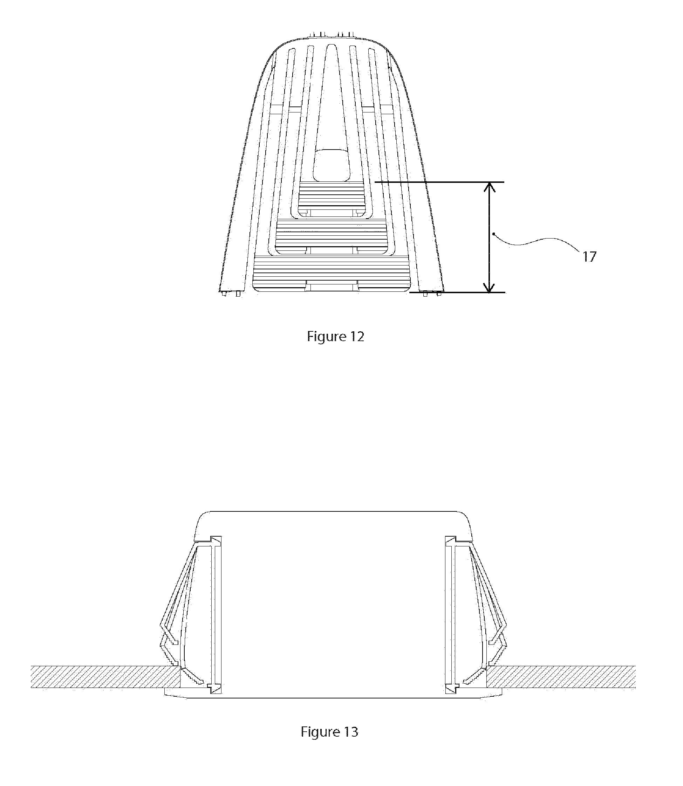

When viewed in Fig. 12 the total height of the gripping means 17 should match or be greater than that of the greatest thickness of the substrate provided to insert the apparatus thereinto. The gripping means could therefore take up a bigger or smaller proportion of the elongated arms and the device could feature more or less elongated features to cater to any change in substrate type or thickness. The gripping means accommodates to any change in substrate thickness within this range.

Referring to fig. 13, the apparatus features a stop means 18 (shown in fig. 11) that during the inserting operation eventually contacts the first surface of the substrate creating a stop that terminates the inserting operation into the finish position. This stop means can be provided in the absence of a stop/lip detail. According to preferred embodiment of invention, the stop means is additionally provided. The resulting combination of opposing forces between the substrate, the aperture and the stop means of the apparatus holds the apparatus securely in place in the substrate.

The invention can adapt to different substrate thickness as shown in Figure 14 and Figure 15. Figure 14 shows the thinnest substrate the preferred embodiment can accommodate and figure 15 indicates the thickest substrate the preferred embodiment of the invention can accommodate.

It is to be noted that the present invention is susceptible to modifications, adaptations and changes by those skilled in the art. Such variant embodiments employing the concepts and features of this invention are intended to be within the scope of the present invention, which is further set forth under the following claims:-

## Claims

1. An apparatus securing device comprising a curved member connected to a plurality of longitudinal members on one side together with a location means on other side for securing the device to the apparatus.

2. An apparatus securing device as claimed in claim 1, wherein the longitudinal members are extended downward and outward from top of the curved member.

3. An apparatus securing device as claimed in claim 1 or 2, wherein the longitudinal members, each of which is having gripping means at distal end to secure the device to the apparatus.

4. An apparatus securing device as claimed in claim 3, wherein the longitudinal members are free to move upon application of a force in the intended area and direction once secured to the corresponding apparatus.

5. An apparatus securing device as claimed in any of the preceding claims, wherein removal means is located in proximity to the gripping means so as to remove the apparatus from aperture of substrate inserted thereinto.

6. An apparatus securing device as claimed in any of the preceding claims, wherein the longitudinal member in conjunction with gripping means and removal means constituting an elongated structure provided in a number.

7. An apparatus securing device as claimed in claim 6, wherein the elongated structures are mounted on the curved member maintaining a gap therebetween from bottom and both sides in which each of the elongated structure is positioned at varying distance from the curved member.

8. An apparatus securing device as claimed in any of the preceding claims, wherein the locating means is mounted on top of the curved member directing towards the apparatus secured therewith.

9. An apparatus securing device as claimed in any of the preceding claims, wherein the longitudinal members are profiled in such a way to allow required deflection inside aperture of substrate during insertion of the apparatus.

10. An apparatus securing device as claimed in any of the preceding claims, wherein the gripping means can be provided in the shapes such as mounds, grooves or other shapes at the desired intervals that secure the device to the aperture/substrate edge.

11. An apparatus securing device as claimed in any of the preceding claims, wherein the gripping means, height of which is greater than equal to (≥) the thickness of the substrate to insert the apparatus thereinto.

12. An apparatus securing device as claimed in any of the preceding claims, wherein a stop means may be provided which during the insertion eventually contacts the substrate causing stoppage thereby terminating the inserting operation into the finish position.
